# FASCICULE DE BREVET EUROPEEN

(11) **EP 1 074 411 B1**
(45) Date de publication et mention de la délivrance du brevet: **22.03.2006**
(21) Numéro de dépôt: 00460047.4
(22) Date de dépôt: 02.08.2000
(51) Int. Cl.: B60J 1/20

(54) **Store à enrouleur à boîtier pré-pincé, et procédé de montage correspondant**
Rollo mit vorgespanntem Gehäuse und korrespondierendes Montageverfahren
Roller blind with pretensioned enclosure and method of corresponding mounting

(30) Priorité: 06.08.1999 FR 9910383
(43) Date de publication de la demande: 07.02.2001
(73) Titulaire: WAGON SAS, 79300 Bressuire (FR)
(72) Inventeur: Bichon, Jacky, 79302 Bressuire (FR)
(74) Mandataire: Vidon, Patrice

(56) Documents cités:
- EP-A- 0 424 327
- FR-A- 2 751 272

## Description

Le domaine de l'invention est celui des stores à enrouleur, notamment pour véhicules automobiles. Plus précisément, l'invention concerne les stores destinés à être rapportés sous un élément du véhicule formant support, tel qu'une tablette arrière, l'habillage d'une porte de hayons, ...

Selon cette technique, une ouverture en forme de fente est ménagée dans l'élément support, par laquelle peut circuler le rideau du store. Le boîtier et le mécanisme d'enroulement du store sont donc camouflés sous l'élément support, et seul est apparent, lorsque que le store est replié, la barre de tirage, qui vient prendre appui sur l'ouverture ménagée dans l'élément support.

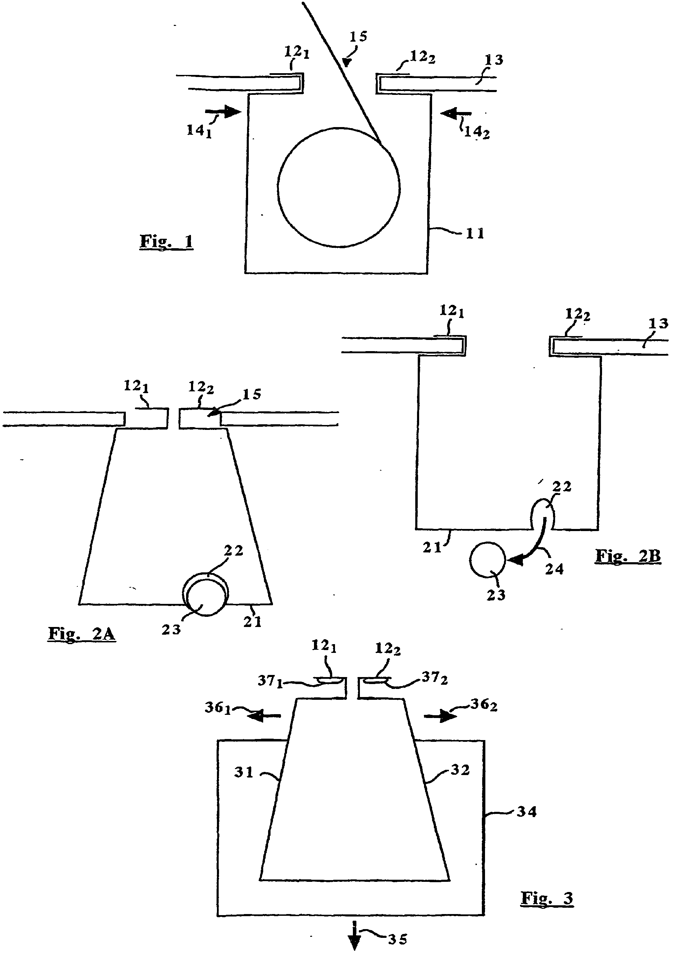

Plusieurs méthodes sont connues pour solidarisées le boîtier du store à son élément support. On connaît notamment, sous le nom de store à cassette, ou boîtier, pincée, une technique selon laquelle la fente ménagée dans le boîtier pour permettre le passage du rideau est prolongée par des lèvres de fixation, qui viennent prendre appui sur l'élément support, ainsi que cela est illustré schématiquement par la figure 1. Un store à enrouleur comprenant les caractéristiques du préambule de la revendication 1 est connu du document EP 0 424 372 A2.

La figure 1 illustre donc, en coupe, un store à cassette pincée 11 présentant deux lèvres d'appui 12₁ et 12₂, venant prendre appui sur une tablette arrière 13 ou un autre élément d'habillage du véhicule.

Pour mettre en place un tel store, il est nécessaire de pincer le boîtier fortement (flèches 14₁ et 14₂), à l'aide d'un outil spécial, de façon que les lèvres 12₁ et 12₂ se rapprochent l'une de l'autre et puissent être introduites dans l'ouverture 15. Une fois cette opération effectuée, on relâche la pression en retirant l'outil, pour que les lèvres se positionnent sur l'habillage 13.

Cette opération de mise en place de la cassette n'est cependant pas toujours aisée, et nécessite un outillage particulier. Il faut en effet un outil permettant d'appliquer la pression suffisante, sur toute la largeur de la cassette.

De plus, en général, il y a peu d'espace pour accéder à l'ouverture ménagée dans l'habillage, et l'accessibilité en elle-même est souvent mauvaise. La mise en place est donc peu aisée, et demande du temps. Dans certaines situations, elle est même impossible, du fait de l'encombrement de l'outil de pincement et du peu de place disponible.

L'invention a notamment pour objectif de pallier ces inconvénients de l'art antérieur.

Plus précisément, l'invention a pour objectif de fournir un store à enrouleur, destiné à être mis en place sur un élément support quelconque d'un véhicule, qui puisse être installé rapidement et facilement, sans nécessiter un outillage particulier.

En d'autres termes, l'invention a pour objectif de fournir un tel store, qui puisse être monté même dans des endroits difficiles d'accès, rapidement, sans outillage ni manipulations préalables.

Ces objectifs, ainsi que d'autres qui apparaîtront par la suite, sont atteints à l'aide d'un store à enrouleur, notamment pour véhicule, comprenant un boîtier présentant une fente de guidage au travers de laquelle s'étend un rideau rétractable, ladite fente de guidage se prolongeant par des lèvres de fixation prévue pour prendre appui sur l'élément support dudit store, après avoir été introduites dans une ouverture ménagée à cet effet dans ledit élément support.

Selon l'invention, ledit store à enrouleur comprend des moyens de pré-pincement dudit boîtier, de façon que :
- avant et pendant le montage dudit store sur ledit élément support, l'écartement entre lesdites lèvres de fixation est tel que ces dernières peuvent être introduites dans ladite ouverture ; et
- lorsqu'on ôte lesdits moyens de pré-pincement, lesdites lèvres de fixation s'écartent, et viennent prendre appui sur ledit élément support.

Ainsi, il n'est plus nécessaire d'agir, à l'aide d'un outil, sur le boîtier pendant son montage. Selon l'invention, on définit donc deux états stables pour le boîtier : un état pré-pincé (permettant un montage aisé, sans outil, et sans avoir à forcer sur le boîtier) et un état monté définitif.

Selon une première approche avantageuse de l'invention, lesdits moyens de pré-pincement agissent sur la base (côté opposé à ladite fente de guidage) de façon à élargir cette dernière et, par conséquence, rapprocher lesdites lèvres de fixation l'une de l'autre.

On peut notamment obtenir ce résultat en prévoyant que ladite base présente au moins un logement, dans lequel un élément écarteur amovible, ou clé, est mis en place lors de la fabrication dudit store.

Il suffit de retirer cette clé pour que le boîtier prenne sa forme définitive, dès que les lèvres ont été mises en place.

De façon avantageuse, ladite clé peut être réalisée en caoutchouc ou en plastique extrudé.

Selon une seconde approche avantageuse de l'invention, lesdits moyens de pré-pincement agissent sur les parties supérieures (c'est-à-dire proches de ladite fente de guidage) des bords latéraux dudit boîtier de façon à les rapprocher l'une de l'autre et, par conséquence, rapprocher lesdites lèvres de fixation l'une de l'autre.

On obtient alors un effet similaire à celui décrit ci-dessus.

Dans ce cas, lesdits moyens de pré-pincement comprennent avantageusement au moins un cavalier amovible formant pince.

Selon un aspect avantageux de l'invention, ladite fente de guidage et/ou lesdites lèvres de fixation sont conçues de façon à renforcer la rigidité dudit élément support.

Notamment, on prévoit de façon avantageuse que lesdites lèvres de fixation sont conçues de façon à êtres solidarisés, par exemple par collage, audit élément support.

Dans ce cas, préférendellement, au moins une desdites lèvres de fixation est pré-encollée. Le collage se fait donc automatiquement, en une seule opération et sans préparation de collage spécifique, lors du montage.

L'invention concerne également le procédé de fabrication et de montage d'un store à enrouleur selon l'invention. Un tel procédé comprend notamment les étapes de :
- lors de la fabrication, mise en place desdits moyens de pré-pincement ;
- lors du montage :
   - introduction directe desdites lèvres de fixation dans ladite ouverture ménagée dans l'élément support ;
   - retrait, sans outillage spécifique, desdits moyens de pré-pincement.

Il apparaît ainsi clairement que le montage est très simplifié, par rapport à la technique connue.

D'autres caractéristiques et avantages de l'invention apparaîtront plus clairement à la lecture de la description suivante de deux modes de réalisation préférentiels de l'invention, donnés à titre de simples exemples illustratifs et non limitatifs, et des figures annexées, parmi lesquelles :
- la figure 1, déjà commentée en préambule, illustre un store à cassette pincée de type connu ;
- les figures 2A et 2B illustrent un premier mode de réalisation de l'invention, mettant en oeuvre une clé de pré-pincement mise en place sur la base du boîtier ;
- la figure 3 illustre un second mode de réalisation de l'invention, mettant en oeuvre un cavalier de pré-pincement, agissant sur les parois latérales du boîtier.

Comme déjà précisé, l'invention repose donc sur une approche toute à fait nouvelle du montage des stores à cassette pincée. Il est en effet proposé de pré-pincer le boîtier, ou la cassette, lors de sa fabrication. La position pincée (pré-pincée) devient donc un état stable, avant le montage. Il n'y a donc plus besoin d'agir dynamiquement, avec un outil spécial, sur le boîtier au moment de son installation, pour rapprocher les lèvres l'une de l'autre de façon qu'elles puissent traverser l'ouverture ménagée dans l'élément support.

Ainsi, le store peut notamment être mis en place sur la tablette arrière d'un véhicule, sur l'habillage d'une porte, ... Le fait qu'aucun outil ne soit nécessaire, et que l'on n'ait pas besoin d'appliquer une pression sur les parois du boîtier rend le montage très facile, et permet d'envisager l'installation d'un store dans de très nombreux emplacements, même difficiles d'accès, ce qui n'était pas le cas avec la technique antérieure.

En position pré-pincée, les lèvres doivent donc être rapprochées l'une de l'autre, de façon à pouvoir traverser l'ouverture 15 (voir figures 2A et 3). Pour cela, il faut agir sur la partie supérieure du boîtier, de façon à réduire sa largeur.

Dans le cas où le boîtier une fois installé présente une section sensiblement carrée ou rectangulaire (comme sur la figure 1), cette section sera par exemple sensiblement trapézoïdale en position pré-pincée, comme illustré sur les figures 2A et 3. Bien sûr, sur ces figures, les proportions ne sont pas obligatoirement respectées. Elles ont une fonction essentiellement illustrative du principe de l'invention.

Plus généralement, le boîtier est conçu de façon à pouvoir prendre les deux positions stables prévues, à savoir la position pré-pincée, et la position définitive après montage.

La cassette peut par exemple être réalisée en tôle d'acier de 0,4 mm d'épaisseur, ou en plastique ou en aluminium. La cassette en acier est réalisée par galetage. Une cassette en aluminium ou en plastique pourrait être réalisée par extrusion.

Selon un premier mode de réalisation illustré notamment par les figures 2A et 2B, on agit sur la base 21 du boîtier. La figure 2A illustre le boîtier en position pré-pincée, en cours de montage, les lèvres 12, et 12₂ traversant l'ouverture 15. La figure 2B présente le store en position montée définitive, dans laquelle les lèvres 12₁ et 12₂ prennent appui sur le support 13.

En position pré-pincée (figure 2A), on agit donc de façon à élargir la base 21. Par voie de conséquence, la partie supérieure se rétrécit, les lèvres 12₁ et 12₂ se rapprochant l'une de l'autre. Lorsque l'on ramène la largeur de la base 21 à sa largeur définitive (figure 2B) la partie supérieure s'élargit, et les lèvres 12₁ et 12₂ prennent leur position sur le support 13.

Plusieurs techniques peuvent être envisagées pour agir sur la largeur de la base. Selon une technique avantageuse, illustrée par les figures, on a prévu dans le boîtier un logement 22, dans lequel on a, lors de la fabrication, inséré une clé (élément écarteur) 23.

Tant que cette clé 23 est présente dans le logement 22 (figure 2A) le boîtier est dans sa position pré-pincée sans qu'il soit nécessaire d'agir dessus avec un outil quelconque. Lorsque le boîtier est prêt à être monté (comme sur la figure 2A), il suffit de retirer (flèche 24) la clé 23. Les bords du logement 22 se rapprochent alors l'un de l'autre, et le boîtier prend automatiquement sa forme définitive.

La clé 23 est par exemple réalisée en caoutchouc ou en plastique extrudé. Elle est insérée après la fabrication du boîtier lui-même.

La figure 3 présente une seconde approche de l'invention, selon laquelle le pré-pincement est obtenu en agissant non plus sur la base du boîtier, mais sur ses bords latéraux 31 et 32.

Cette opération est par exemple obtenue à l'aide d'une pièce 34 formant un cavalier autour du boîtier, et appliquant une force suffisante sur la partie supérieure de chacune des parois 31 et 32 pour que les lèvres se rapprochent l'une de l'autre, ainsi que cela est illustré en figure 3. Lorsque les lèvres 12₁ et 12₂ ont traversé la fente ménagée dans l'élément support, il suffit de retirer l'élément de pré-pincement (le cavalier) 34, comme illustré par la flèche 35. Le boîtier reprend alors automatiquement sa forme définitive (flèches 36₁, 36₂), et le montage est terminé.

La présence d'une ouverture 15 en l'élément de support 13 fragilise bien sûr ce dernier. Préférentiellement, le boîtier, et notamment les lèvres 12₁ et 12₂, sont conçues de façon à renforcer la rigidité de l'élément de support (notamment lorsqu'il s'agit d'une tablette). On prévoit donc avantageusement que les lèvres 12₁ et 12₂ soient solidarisées à l'élément support 13.

Cette solidarisation peut notamment être effectuée par collage. Dans ce cas, avantageusement, les lèvres 12₁ et 12₂ sont pré-encollées (37₁, 37₂) lors de leur fabrication.

Le montage est alors, clairement, grandement facilité, puisqu'il suffit d'ôter l'élément de pré-pincement (clé 23 ou cavalier 34) pour que le boîtier se mette en place et se solidarise, par collage, à son élément support.

Selon l'invention, on a donc prévu un procédé de fabrication et de montage d'un store pincé tout à fait nouveau. C'est lors de la fabrication que l'on crée un état stable de pré-pincement, et que l'on prévoit, le cas échéant l'encollage.

En contre-partie, lors du montage, il suffit d'introduire les lèvres du boîtier dans l'ouverture prévue à cet effet, puis de retirer l'élément de pré-pincement. Aucun outil, ni aucune préparation particulière, n'est donc nécessaire.

## Revendications

1. Store à enrouleur, notamment pour véhicule, comprenant un boîtier présentant une fente de guidage (15) au travers de laquelle s'étend un rideau rétractable,
ladite fente de guidage se prolongeant par des lèvres de fixation (12₁, 12₂) prévues pour prendre appui sur l'élément support (13) dudit store, après avoir été introduites dans une ouverture ménagée à cet effet dans ledit élément support, **caractérisé en ce qu'**il comprend des moyens (23 ; 34) de pré-pincement dudit boîtier, de façon que :
- avant et pendant le montage dudit store sur ledit élément support (13), l'écartement entre lesdites lèvres de fixation (12₁, 12₂) est tel que ces dernières peuvent être introduites dans ladite ouverture (15);et
- lorsqu'on ôte lesdits moyens (23 ; 34) de pré-pincement, lesdites lèvres de fixation (12₁, 12₂) s'écartent, et viennent prendre appui sur ledit élément support (13).

2. Store à enrouleur selon la revendication 1, **caractérisé en que** lesdits moyens (23) de pré-pincement agissent sur la base (21), c'est-à-dire côté opposé à ladite fente de guidage (15), de façon à élargir cette dernière et, par conséquence, rapprocher lesdites lèvres de fixation (12₁, 12₂) l'une de l'autre.

3. Store à enrouleur selon la revendication 2, **caractérisé en ce que** ladite base (21) présente au moins un logement (22), dans lequel un élément écarteur amovible (23), ou clé, est mis en place lors de la fabrication dudit store.

4. Store à enrouleur selon la revendication 3, **caractérisé en ce que** ladite clé (23) est réalisée en caoutchouc ou en plastique extrudé.

5. Store à enrouleur selon la revendication 1, **caractérisé en ce que** lesdits moyens (34) de pré-pincement agissent sur les parties supérieures, c'est-à-dire proches de ladite fente de guidage (15), des bords latéraux (31, 32) dudit boîtier de façon à les rapprocher l'une de l'autre et, par conséquence, rapprocher lesdites lèvres de fixation (12₁, 12₂) l'une de l'autre.

6. Store à enrouleur selon la revendication 5, **caractérisé en ce que** lesdits moyens de pré-pincement comprennent au moins un cavalier amovible (34) formant pince.

7. Store à enrouleur selon l'une quelconque des revendications 1 à 6, **caractérisé en ce que** ladite fente de guidage (15) et/ou lesdites lèvres de fixation (12₁, 12₂) sont conçus de façon à renforcer la rigidité dudit élément support.

8. Store à enrouleur selon l'une quelconque des revendications 1 à 7, **caractérisé en ce que** lesdites lèvres de fixation (12₁, 12₂) sont conçues de façon à êtres solidarisés, par exemple par collage, audit élément support.

9. Store à enrouleur selon la revendication 8, **caractérisé en ce qu'**au moins une desdites lèvres de fixation (12₁, 12₂) est pré-encollée (37₁, 37₂).

10. Procédé de fabrication et de montage d'un store à enrouleur selon l'une quelconque des revendications 1 à 9, **caractérisé en ce qu'**il comprend les étapes de :
- lors de la fabrication, mise en place desdits moyens (23 ; 34) de pré-pincement ;
- lors du montage :
- introduction directe desdites lèvres de fixation (12₁, 12₂) dans ladite ouverture ménagée dans l'élément support (13) ;
- retrait, sans outillage spécifique, desdits moyens de pré-pincement (23 ; 34).

## Patentansprüche

1. Rollo mit Aufrollmechanismus, insbesondere für Fahrzeuge, welches ein Gehäuse mit einem Führungsschlitz (15) hat, durch den sich ein Vorhang erstreckt, der sich zurückziehen lässt,
wobei der Führungsschlitz durch Befestigungslippen (12₁, 12₂) verlängert wird, die so ausgelegt sind, dass sie auf dem Träger (13) des Rollos aufliegen, nachdem sie durch eine zu diesem Zweck im Träger vorgesehenen Öffnung gesteckt wurden,
**dadurch gekennzeichnet, dass** es über Mittel (23; 34) zum vorherigen Einklemmen des Gehäuses vorgesehen ist, so dass:
- vor und während der Montage des Rollos auf dem Träger (13) der Abstand zwischen den Befestigungslippen (12₁, 12₂) derart ist, dass diese durch die Öffnung (15) passen, und,
- wenn die Mittel (23; 34) zum vorherigen Einklemmen entfernt werden, die Befestigungslippen (12₁, 12₂) auseinander gehen und auf dem Träger (13) aufliegen.

2. Rollo nach Anspruch 1,
**dadurch gekennzeichnet, dass** die Mittel (23) zum vorherigen Einklemmen auf die Basis (21) wirken, d.h., auf der entgegengesetzten Seite zum Führungsschlitz (15), um diesen zu erweitern und um demnach die Befestigungslippen (12₁, 12₂) zusammenzuführen.

3. Rollo nach Anspruch 2,
**dadurch gekennzeichnet, dass** die Basis (21) mindestens ein Gehäuse (22) aufweist, in welches ein herausnehmbares Spreizelement (23) oder ein herausnehmbarer Schlüssel bei der Herstellung des Rollos eingeführt wird.

4. Rollo nach Anspruch 3,
**dadurch gekennzeichnet, dass** der Schlüssel (23) aus Gummi oder aus stranggepresstem Kunststoff hergestellt ist.

5. Rollo nach Anspruch 1,
**dadurch gekennzeichnet, dass** die Mittel (34) zum vorherigen Einklemmen auf die oberen Teile wirken, d.h., der in der Nähe des Führungsschlitzes (15) und der Seitenränder (31, 32) des Gehäuses liegenden Teile, um sie einander näher zu bringen und somit die Befestigungslippen (12₁, 12₂) näher aneinander zu rücken.

6. Rollo nach Anspruch 5,
**dadurch gekennzeichnet, dass** die Mittel zum vorherigen Einklemmen mindestens einen als Klammer wirkenden, entfernbaren Reiter (34) umfassen.

7. Rollo nach einem der Ansprüche 1 bis 6,
**dadurch gekennzeichnet, dass** der Führungsschlitz (15) und/oder die Befestigungslippen (12₁, 12₂) so konstruiert sind, dass sie die Festigkeit des Trägers erhöhen.

8. Rollo nach einem der Ansprüche 1 bis 7,
**dadurch gekennzeichnet, dass** die Befestigungslippen (12₁, 12₂) so konstruiert sind, dass sie beispielsweise durch Aufkleben mit dem Träger verbunden werden können.

9. Rollo nach Anspruch 8,
**dadurch gekennzeichnet, dass** mindestens eine der Befestigungslippen (12₁, 12₂) im Voraus mit einer Kleberschicht (37₁, 37₂) ausgestattet ist.

10. Fertigungs- und Montageverfahren eines Rollos nach einem der Ansprüche 1 bis 9,
**dadurch gekennzeichnet, dass** es die folgenden Schritte aufweist:
- Anbringen der Mittel zum vorherigen Einklemmen (23; 34) bei der Fertigung;
- bei der Montage:
- direktes Einführen der Befestigungslippen (12₁, 12₂) in die in dem Träger (13) vorgesehene Öffnung;
- Entfernen der Mittel zum vorherigen Einklemmen (23; 34) ohne spezielles Werkzeug.

## Claims

1. Blind with a winding mechanism, particularly for a vehicle, said blind comprising a casing having a guide slot (15) through which a retractable screen extends, the said guide slot being prolonged by fixing flanges (12₁, 12₂) which are intended to be supported on the element (13) for supporting the said blind after being introduced into an opening provided for that purpose in the said supporting element,
**characterised in that** said blind comprises means (23; 34) for pretensioning the said casing, in such a way that:
- before and during the fitting of the said blind onto the said supporting element (13), the space between the said fixing flanges (12₁, 12₂) is such that the latter can be introduced into the said opening (15); and
- when the said pretensioning means (23 ; 34) are removed, the said fixing flanges (12₁, 12₂) move apart and rest on the said supporting element (13).

2. Blind with a winding mechanism according to Claim 1, **characterised in that** the said pretensioning means (23) act on the base (21), that is to say, the side opposite the said guide slot (15), in such a way as to widen it and, consequently, to bring the said fixing flanges (12₁, 12₂) closer to one another.

3. Blind with a winding mechanism according to Claim 2, **characterised in that** the said base (21) has at least one housing (22) in which a detachable spreading element (23), or key, is placed in position when the said blind is manufactured.

4. Blind with a winding mechanism according to Claim 3, **characterised in that** the said key (23) is made of rubber or extruded plastic.

5. Blind with a winding mechanism according to Claim 1, **characterised in that** the said pretensioning means (34) act on the upper parts, that is to say the parts close to the said guide slot (15), of the lateral edges (31, 32) of the said casing, in such a way as to bring them closer to one another and, consequently, to bring the said fixing flanges (12₁, 12₂) closer to one another.

6. Blind with a winding mechanism according to Claim 5, **characterised in that** the said pretensioning means comprise at least one detachable staple (34) forming a holder.

7. Blind with a winding mechanism according to any of Claims 1 to 6, **characterised in that** the said guide slot (15) and/or the said fixing flanges (12₁, 12₂) are designed in such a way as to reinforce the rigidity of the said supporting element.

8. Blind with a winding mechanism according to any of Claims 1 to 7, **characterised in that** the said fixing flanges (12₁, 12₂) are designed in such a way as to be attached, for example by adhesion, to the said supporting element.

9. Blind with a winding mechanism according to Claim 8, **characterised in that** at least one of the said fixing flanges (12₁, 12₂) is pre-coated with adhesive (37₁, 37₂).

10. Method of manufacturing and fitting a stored with a winding mechanism according to any of Claims 1 to 9, **characterised in that** it comprises the following stages:
- the placing of the said pretensioning means (23 ; 34) in position at the time of manufacture;
- at the time of fitting:
- the direct introduction of the said fixing flanges (12₁, 12₂) into the said opening provided in the supporting element (13);
- the withdrawal, without specific tools, of the said pretensioning means (23 ; 34).
